# EUROPEAN PATENT SPECIFICATION

(11) **EP 0 304 497 B1**
(45) Date of publication and mention of the grant of the patent: **03.03.1993**
(21) Application number: 87110996.3
(22) Date of filing: 29.07.1987
(51) Int. Cl.: C04B 41/49, C08G 77/04, C08L 83/10, C09D 183/00

(54) **Water repellent for masonry**
Wasserabweisendes Mittel für Bauwerke
Agent hydrofuge pour la maçonnerie

(43) Date of publication of application: 01.03.1989
(73) Proprietor: GENERAL ELECTRIC COMPANY, Schenectady New York 12305 (US)
(72) Inventor: Merrill, Duane Franklin, Ballston Spa New York 12020 (US)
(74) Representative: Pratt, Richard Wilson

(56) References cited:
- FR-A- 1 241 740
- GB-A- 860 522
- GB-A- 2 140 815
- US-A- 2 736 721
- US-A- 2 810 704
- US-A- 3 623 895
- US-A- 4 423 095
- SOVIET INVENTIONS ILLUSTRATED, Chemistry Section, week K01, 16th February 1983, abstract no. 02044, Derwent Publications Ltd., London, GB.

## Description

The present invention generally relates to the treatment of porous materials in order to render them water repellent. More particularly, the present invention relates to silicone compositions suitable for rendering masonry such as brick, concrete, stone, mortar, tile, cinder block, stucco and the like water repellent and stain resistant.

Silicones have been used to render masonry water repellent for many years. The heretofore employed silicones have met with considerable commercial success and are used on all types of masonry. However, the heretofore employed silicones tended to leave the surface of the masonry somewhat tacky and hence caused dirt to adhere thereto. Additionally, many of the previously employed silicones did not maintain excellent water repellency after prolonged exposure to weather nor did they impart stain resistance to the masonry.

U.S.-A-2,412,470 discloses a process for treating a solid body to render it water repellent which comprises contacting said body with a composition containing, as the active ingredient thereof, a mixture consisting essentially of from about 2.8 to 99.2 weight percent trimethyl silicon chloride and from about 97.2 to 0.8 weight percent silicon tetrachloride.

FR-A-1 241 740 describes a silicone composition for use on masonry to improve its adhesion for portland cement.

U.S.-A-2,574,168 provides a process for rendering porous masonry structures water repellent by applying to such masonry structures a dilute liquid comprising an organic solvent solution of a silicone resin in its B-staged partially condensed form, wherein the concentration of the silicone resin is from about 0.1 to 5 parts by weight, said silicone resin when completely condensed being a heterocyclic and crosslinked condensation product having the formula (RₘSiOₙ)ₓ, where x is an integer greater than one, R represents monovalent alkyl or aryl radicals, m is a number less than two but not less than 0.5, and n is a number more than one and not less than about 1.75, the silicon atoms in the resin being linked to the oxygen atoms and the alkyl and aryl radicals being attached to silicon atoms.

U.S.-A-2,672,455 provides a water repellent for leather which comprises (1) 15 to 50 percent by weight of a titanium compound selected from the group consisting of titanium compounds having the general formula Ti(OR)₄ and aliphatic hydrocarbon soluble partial hydrolyzates thereof in which R is an aliphatic hydrocarbon radical or hydroxylated aliphatic hydrocarbon radical, (2) 15 to 70 percent by weight of a methylpolysiloxane copolymer composed of trimethylsiloxane units and SiO₂ units, said units being in such proportion that the ratio of methyl radicals to silicon atoms is from 1.0 to 2.5:1, and (3) 15 to 80 percent by weight of a polysiloxane having the general formula R'ₙ SiO_{(4-n)/2}, where R' is a C₁₋₄ alkyl or alkylene radical or a monocyclic aryl radical, and n having an average value of 2 to 2.9, each silicon atom in polysiloxane (3) having at least one R' radical attached thereto.

U.S.-A-2,678,893 teaches a method for rendering leather water repellent comprising contacting the leather with a solution of a methylpolysiloxane composed of trimethylsiloxane units and SiO₂ units in such proportion that the ratio of methyl radicals to silicon atoms is from 1 to 2.5, said solution containing from 1 to 50 percent by weight of the methylpolysiloxane.

U.S.-A-2,735,791 relates to a waterproofing composition suitable for application to fibrous organic materials which comprises an aqueous emulsion containing 20 to 60 weight percent, as solids, of a methyl polysiloxanic resin having a CH₃ to Si ratio between 1.3:1 and 1.7:1; 20 to 50 weight percent of a methyl polysiloxanic oil having a CH₃ to Si ratio between 1.9:1 and 2.1:1; and from 8 to 40 weight percent triethanolamine titanate.

U.S.-A-2,928,798 discloses compositions useful for rendering porous materials water repellent which comprise, by weight, (1) from 10 to 60 percent of a titanium compound selected from the group consisting of (a) orthotitanates having the general formula Ti(OR)₄, where R is an aliphatic hydrocarbon radical or an aminated or hydroxylated aliphatic hydrocarbon radical, and (b) aliphatic hydrocarbon soluble partial hydrolyzates of (a); (2) from 25 to 75 percent of a methylsiloxane copolymer containing trimethylsiloxy units and SiO₂ units, wherein the ratio of methyl groups to silicon atoms ranges from about 1 to 1.25, and (3) from 10 to 50 percent of a fluid organopolysiloxane having the formula R'ₙSiO_{(4-n)/2}, where R' represents both lower alkyl radicals and chlorinated phenyl radicals containing an average of 3 to 5 chlorine atoms per phenyl nucleus, the chlorinated phenyl radicals constituting from 5 to 25 percent of the total number of R' radicals, n has an average value between 1.96 and 2.5, and the viscosity is from 10 centistokes to 100,000 centistokes at 25°C.

It is an object of the present invention to provide compositions for rendering masonry water repellent.

It is another object of the present invention to provide masonry water repellent compositions which cure to a dry, non-tacky material.

Still another object of the present invention is to provide masonry water repellent compositions which also impart stain resistance to the masonry material.

An additional object of the present invention is to provide a masonry treatment which will remain effective for an extended period of time under severe weather conditions.

In its broadest aspect, the present invention provides a composition for rendering masonry water repellent, comprising
(a) an organopolysiloxane resin selected from the group consisting of resins containing R₃SiO_{0.5} units and SiO₂ units, the ratio of R₃SiO_{0.5} units to SiO₂ units ranging from about 0.2 to about 0.9:1 (e.g. MQ resins), and resins containing R₃SiO_{0.5} units, R₂SiO units, and SiO₂ units, the ratio of R₃SiO_{0.5} units to SiO₂ units ranging from about 0.2 to about 0.9:1 and the ratio of R₂SiO units to SiO₂ units being up to about 0.1:1 (e.g. MDQ resins); where each R is an independently selected substituted or unsubstituted alkyl radical, aryl radical, alkaryl radical, aralkyl radical, cycloalkyl radical or alkenyl radical;
(b) an alkylalkoxypolysiloxane resin; and
(c) an effective amount of solvent,
wherein the ratio of (a) to (b) is from about 1:1 to about 9:1.

Said composition is used in a method for rendering masonry water repellent, comprising contacting the masonry with a solution comprising an organopolysiloxane resin selected from the group consisting of resins containing R₃SiO_{0.5} units and SiO₂ units, the ratio of R₃SiO_{0.5} units to SiO₂ units ranging from about 0.2 to about 0.9:1 and resins containing R₃SiO_{0.5} units, R₂SiO₂ units, and SiO₂ units, the ratio of R₃SiO_{0.5} units to SiO₂ units ranging from about 0.2 to about 0.9:1 and the ratio of R₂SiO units to SiO₂ units being up to about 0.1:1; where each R is an independently selected substituted or unsubstituted alkyl radical, aryl radical, alkaryl radical, aralkyl radical, cycloalkyl radical or alkenyl radical; and thereafter evaporating the solvent. Preferably, substantially all of the R groups are methyl.

Methods for preparing such organopolysiloxane resins are well known in the art, for example, as described in U.S.-A-2,398,672, U.S.-A-2,676,182, U.S.-A-2,736,721 and U.S.-A-2,857,356. Other methods for preparing resins of this type will be apparent to those of ordinary skill in the art.

Generally, the MQ and MDQ resins employed in the practice of the invention are provided as a solution in an organic solvent such as xylene or toluene, and typically as a 40 to 60 percent by weight solution. It is, however, desirable to dilute the solution so that it contains from about 1 to about 20 weight percent resin solids before applying it to masonry by conventional means such as, brushing, spraying, and the like. Most preferably, the solution contains about 10 weight percent resin solids.

It should be understood that the term "masonry" as used herein includes, but is not limited to, building and surfacing materials such as brick, concrete, cinder block, mortar, tile, stone, stucco, sandstone, limestone and equivalent materials. A particularly preferred aspect of the present invention involves applying the compositions of the present invention to statues and stone monuments in order to protect them from the adverse affects of acid rain and other environmental pollutants.

After the organopolysiloxane resin has been applied to the masonry, the solvent is evaporated by air drying or exposing the coated masonry to elevated temperatures, for example, in a forced hot air oven. For practical reasons, it is usually most convenient to allow the coated masonry to air dry.

It is believed that the excellent and long-lasting protection imparted by MQ and MDQ resins is due, at least in part, to the fact that they penetrate more deeply into the pores of the masonry than do prior art water repellent compositions. Thus, the compositions of the present invention penetrate up to about 12,5 mm (1/2 inch) below the masonry surface whereas prior art compositions generally do not penetrate more than about 1,5 to about 3 mm (1/16 to 1/8 inch). In addition, the MQ and MDQ resins employed in the present invention can be super saturated onto all porous surfaces without staining and any excess on the surface can be brushed off because it is a dry powder at 100% solids.

In an especially preferred embodiment of the present invention, the water repellent composition comprises a blend of an MQ resin and/or an MDQ resin and an alkylalkoxypolysiloxane resin. Alkylalkoxypolysiloxane resins contemplated for use in the present invention are described in U.S.-A-2,624,749 and U.S.-A-2,810,704. Particularly preferred for use in the present invention are the methylmethoxypolysiloxane resins of US-A-2,810,704 which are available from General Electric Company under the trademark DF104. Other suitable alkoxy-functional silicone resins will be obvious to the artisan or their suitability can be ascertained without undue experimentation.

The MQ resin and/or MDQ resin is blended with the alkylalkoxypolysiloxane resin in a ratio of from about 50 to about 90 parts by weight MQ resin and/or MDQ resin and from about 10 to about 50 parts by weight alkylalkoxypolysiloxane resin (i.e., from about 1:1 to about 9:1), although ratios outside of this range are not precluded. Optimal results have been obtained thus far when there is employed about 70 parts by weight MQ resin and/or MDQ resin and about 30 parts by weight methylmethoxypolysiloxane resin (i.e. DF104).

In order to better enable the artisan to practice the present invention, the following examples are provided by way of illustration and not by way of limitation. All parts and percentages are by weight unless otherwise noted.

### EXAMPLES

### Example 1 (Comparison example)

A 60% solids in xylene resin composed of (CH₃)₃SiO_{0.5} units and SiO₂ units in a ratio of 0.8:1 was diluted to 10% solids with mineral spirits. The diluted solution was applied by brushing to Danby Vermont Marble, concrete test block, and clay fired, redstone tile. Following air drying for 24 hours the coated materials all exhibited excellent water repellency.

It was noted that the resin solution completely penetrated through about 1 cm (3/8 inch) thick marble providing for internal water repellency, not just surface protection as with many prior art film-forming water repellent compositions. It was also noted that the resin solution penetrated about halfway through the about 1 cm (3/8 inch) clay fired, redstone tile.

### Example 2 Comparison example

The resin solution prepared in Example 1 was coated on concrete test block, dried 48 hours, and weighed before being immersed briefly in water. The block was patted dry with absorbent paper and reweighed. There was an increase in weight of 0.5 gram. The block was then immersed in water for 48 hours, patted dry with absorbent paper and reweighed. There was an increase in weight of 1 gram. Following a 14 day immersion, there was a 4 gram increase in weight compared to a 19 gram increase in weight on a non-treated block.

### Example 3 Comparison example

The treated Danby Vermont Marble of Example 1 was further tested for stain resistance. Black spray enamel diluted in toluene and naphtha was sprayed on the surface and after drying for one hour the paint was completely removed with a solvent wipe. On untreated Danby Vermont Marble, the paint left a permanent black stain.

### Example 4 Comparison example

A blend containing 50 grams of the MQ resin of Example 1, 4.3 grams of DF104 resin available from General Electric Company, and 276 grams of mineral spirits was mixed by simple shaking in a glass bottle. The blend was completely compatible in solution and was clear upon evaporation of the solvent. A heavy coating of this blend was applied by brushing to a cement test block and air dried for 24 hours. The block was then immersed in water for three days. The block was blotted dry and tested for water repellency with drops of water placed on the surface. The drops flattened showing a low contact angle.

### Example 5

A blend of 50 grams of the MQ resin of Example 1, 8.6 grams DF104 resin, and 301 grams of mineral spirits was prepared and tested as in Example 4. Drops of water placed on the cement block were not as flat as in Example 4, but there was not a sharp contact angle.

### Example 6

A blend containing 50 grams of the MQ resin of Example 1, 12.9 grams of DF104 resin, and 327 grams of mineral spirits was prepared and tested as in Example 4. Drops of water placed on the cement block showed a very sharp contact angle and stayed in a sphere.

### Example 7

A blend containing 50 grams of the MQ resin of Example 1, 17.2 grams of DF104 resin, and 355 grams of mineral spirits was prepared and tested as in Example 4. The contact angle of drops of water on the cement surface was not as spherical as in Example 6.

## Claims

1. A composition for rendering masonry water repellent, consisting of:
(a) an organopolysiloxane resin selected from the group consisting of resins containing R₃SiO_{0.5} units and SiO₂ units, the ratio of R₃SiO_{0.5} units to SiO₂ units ranging from about 0.2 to about 0.9:1 and resins containing R₃SiO_{0.5} units, R₂SiO units, and SiO₂ units, the ratio of R₃SiO_{0.5} units to SiO₂ units ranging from about 0.2 to about 0.9:1 and the ratio of R₂SiO units to SiO₂ units being up to about 0.1:1; where each R is an independently selected substituted or unsubstituted alkyl radical, aryl radical, alkaryl radical, aralkyl radical, cycloalkyl radical or alkenyl radical;
(b) an alkylalkoxypolysiloxane resin; and
(c) an effective amount of solvent,
wherein the ratio of (a) to (b) is from about 1:1 to about 9:1.

2. A composition as in Claim 1, wherein the ratio of (a) to (b) is about 7:3.

3. A composition as in Claim 1, wherein the solvent is an organic solvent.

4. A composition as in Claim 3, wherein the solvent is selected from toluene and xylene.

5. A composition as in Claim 1, wherein the composition is from about 1 to about 20 weight percent resin solids.

6. A composition as in Claim 1, wherein the alkylalkoxypolysiloxane resin has the empirical formula 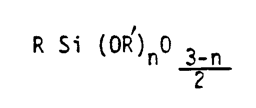 wherein n is a number from 1/3 to 1, R is a monovalent organic radical having no olefinic unsaturation in which the free valence is connected to an acyclic carbon atom to which at least one hydrogen atom is attached, and in which any atom other than carbon and hydrogen is a halogen having an atomic weight less than 80 that is attached to a carbon atom other than one connected to said acyclic carbon atom; and R' is a monovalent organic radical having no olefinic unsaturation in which the free valence is connected to an aliphatic carbon atom to which at least one hydrogen atom is attached, and in which any atom other than carbon and hydrogen is a halogen having an atomic weight less than 80.

7. A composition as in Claim 1, wherein the alkylalkoxypolysiloxane resin has the formula 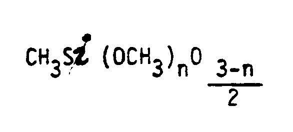 where n has a value of from 1/3 to 0.7 and is prepared by (a) treating methyltrichlorosilane in the absence of water and in the presence of a water insoluble inert solvent for the latter with methanol in an amount equal to from 1 to less than 3 moles methanol per mole of methyltrichlorosilane, the upper limit of methanol being sufficient to replace only part of the silicon-bonded chlorine atoms of the methyltrichlorosilane with methoxy groups, the by-product HCl being retained in the reaction mixture, (b) hydrolyzing the mixing of ingredients of (a) with a mixture of ingredients comprising methanol and water in which the water used is present in an amount equal to from 1.15 to 1.33 moles of the latter per mole of methyltrichlorosilane originally used, there being employed in step (a) from 25 to 75% of the total amount of methanol used in steps (a) and (b), (c) permitting the hydrolysis product of (b) to condense in the presence of the hydrogen chloride dissolved in the reaction mixture, and (d) isolating the resin-containing layer from the multiphase liquid system obtained as a result of the condensation described in (c).

8. A composition consisting of:
(a) an organopolysiloxane resin selected from the group consisting of resins containing R₃SiO_{0.5} units and SiO₂ units, the ratio of R₃SiO_{0.5} units to SiO₂ units ranging from about 0.2 to about 0.9:1 and resins containing R₃SiO_{0.5} units, R₂SiO units, and SiO₂ units, the ratio of R₃SiO_{0.5} units to SiO₂ units ranging from about 0.2 to about 0.9:1 and the ratio of R₂SiO units to SiO₂ units being up to about 0.1:1; where each R is an independently selected substituted or unsubstituted alkyl radical, aryl radical, alkaryl radical, aralkyl radical, cycloalkyl radical or alkenyl radical;
(b) an alkylalkoxypolysiloxane resin; and
(c) an effective amount of solvent,
wherein the ratio of (a) to (b) is from about 1:1 to about 9:1.

9. Use of a composition for rendering masonry water repellent, said composition consisting of:
(a) an organopolysiloxane resin selected from the group consisting of resins containing R₃SiO_{0.5} units and SiO₂ units, the ratio of R₃SiO_{0.5} units to SiO₂ units ranging from about 0.2 to about 0.9:1 and resins containing R₃SiO_{0.5} units, R₂SiO units, and SiO₂ units, the ratio of R₃SiO_{0.5} units to SiO₂ units ranging from about 0.2 to about 0.9:1 and the ratio of R₂SiO units to SiO₂ units being up to about 0.1:1; where each R is an independently selected substituted or unsubstituted alkyl radical, aryl radical, alkaryl radical, aralkyl radical, cycloalkyl radical or alkenyl radical;
(b) an alkylalkoxypolysiloxane resin; and
(c) an effective amount of solvent,
wherein the ratio of (a) to (b) is from about 1:1 to about 9:1.

10. Use as in Claim 9, wherein the ratio of (a) to (b) is about 7:3.

11. Use as in Claim 9, wherein the solvent is an organic solvent.

12. Use as in Claim 11, wherein the solvent is selected from toluene and xylene.

13. Use as in Claim 9, wherein the composition is from about 1 to about 20 weight percent resin solids.

14. Use as in Claim 9, wherein the alkylalkoxypolysiloxane resin has the empirical formula 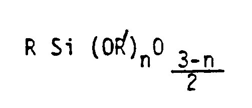 wherein n is a number from 1/3 to 1, R is a monovalent organic radical having no olefinic unsaturation in which the free valence is connected to an acyclic carbon atom to which at least one hydrogen atom is attached, and in which any atom other than carbon and hydrogen is a halogen having an atomic weight less than 80 that is attached to a carbon atom other than one connected to said acyclic carbon atom; and R' is a monovalent organic radical having no olefinic unsaturation in which the free valence is connected to an aliphatic carbon atom to which at least one hydrogen atom is attached, and in which any atom other than carbon and hydrogen is a halogen having an atomic weight less than 80.

15. Use as in Claim 9, wherein the alkylalkoxypolysiloxane resin has the formula 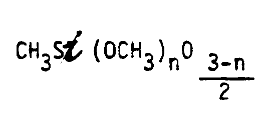 where n has a value of from 1/3 to 0.7 and is prepared by (a) treating methyltrichlorosilane in the absence of water and in the presence of a water insoluble inert solvent for the latter with methanol in an amount equal to from 1 to less than 3 moles methanol per mole of methyltrichlorosilane, the upper limit of methanol being sufficient to replace only part of the silicon-bonded chlorine atoms of the methyltrichlorosilane with methoxy groups, the by-product HCl being retained in the reaction mixture, (b) hydrolyzing the mixing of ingredients of (a) with a mixture of ingredients comprising methanol and water in which the water used is present in an amount equal to from 1.15 to 1.33 moles of the latter per mole of methyltrichlorosilane originally used, there being employed in step (a) from 25 to 75% of the total amount of methanol used in steps (a) and (b), (c) permitting the hydrolysis product of (b) to condense in the presence of the hydrogen chloride dissolved in the reaction mixture, and (d) isolating the resin-containing layer from the multiphase liquid system obtained as a result of the condensation described in (c).

16. Use as in Claim 14, wherein the ratio of (a) to (b) is from about 50:4,3 to about 50:17,2.

## Patentansprüche

1. Zusammensetzung, um Mauerwerk wasserabstoßend zu machen, bestehend aus:
(a) einem Organopolysiloxanharz, ausgewählt aus der Gruppe bestehend aus Harzen, die R₃SiO_{0,5}-Einheiten und SiO₂-Einheiten enthalten, wobei das Verhältnis der R₃SiO_{0,5}-Einheiten zu den SiO₂-Einheiten im Bereich von etwa 0,2 bis etwa 0,9:1 liegt und Harzen, die R₃SiO_{0,5}-Einheiten, R₂SiO-Einheiten und SiO₂-Einheiten enthalten, wobei das Verhältnis der R₃SiO_{0,5}-Einheiten zu den SiO₂-Einheiten im Bereich von etwa 0,2 bis etwa 0,9:1 liegt und das Verhältnis der R₂SiO-Einheiten zu SiO₂-Einheiten bis zu etwa 0,1:1 beträgt, worin jedes R ein unabhängig ausgewählter substituierter oder unsubstituierter Alkylrest, Arylrest, Alkarylrest, Aralkylrest, Cycloalkylrest oder Alkenylrest ist;
(b) einem Alkylalkoxypolysiloxanharz und
(c) einer wirksamen Menge Lösungsmittel,
worin das Verhältnis von (a) zu (b) im Bereich von etwa 1:1 bis etwa 9:1 liegt.

2. Zusammensetzung nach Anspruch 1, worin das Verhältnis von (a) zu (b) etwa 7:3 beträgt.

3. Zusammensetzung nach Anspruch 1, worin das Lösungsmittel ein organisches Lösungsmittel ist.

4. Zusammensetzung nach Anspruch 3, worin das Lösungsmittel ausgewählt ist aus Toluol und Xylol.

5. Zusammensetzung nach Anspruch 1, worin die Zusammensetzung etwa 1 bis 20 Gew.-% Harzfeststoffe aufweist.

6. Zusammensetzung nach Anspruch 1, worin das Alkylalkoxypolysiloxanharz die empirische Formel hat 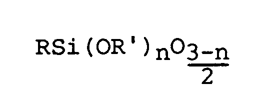 worin n eine Zahl von 1/3 bis 1 ist, R ein einwertiger organischer Rest ist, der keine olefinische Ungesättigtheit aufweist, bei dem die freie Wertigkeit mit einem acyclischen Kohlenstoffatom verbunden ist, an das mindestens ein Wasserstoffatom gebunden ist und bei dem irgendein Atom, das anders ist als Kohlenstoff und Wasserstoff, ein Halogen mit einem Atomgewicht von weniger als 80 ist, das an ein anderes Kohlenstoffatom gebunden ist, als eines, das an das acyclische Kohlenstoffatom gebunden ist und R' ein einwertiger organischer Rest ohne olefinische Ungesättigtheit ist, bei dem die freie Wertigkeit mit einem aliphatischen Kohlenstoffatom verbunden ist, an das mindestens ein Wasserstoffatom gebunden ist und bei dem irgendein anderes Atom als Kohlenstoff und Wasserstoff ein Halogen mit einem Atomgewicht von weniger als 80 ist.

7. Zusammensetzung nach Anspruch 1, worin das Alkylalkoxypolysiloxanharz die Formel hat 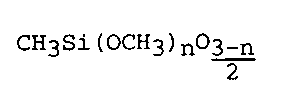 worin n einen Wert von 1/3 bis 0,7 hat und es hergestellt ist durch
(a) Behandeln von Methyltrichlorsilan bei Abwesenheit von Wasser und in Anwesenheit eines in Wasser unlöslichen inerten Lösungsmittels für das Letztere, mit Methanol in einer Menge, die gleich 1 bis weniger als 3 Mole Methanol pro Mol des Methyltrichlorsilans beträgt, wobei die obere Grenze des Methanols ausreicht, nur einen Teil der silikongebundenen Chloratome des Methyltrichlorsilans durch Methoxygruppen zu ersetzen und das Nebenprodukt HCl in der Reaktionsmischung verbleibt,
(b) Hydrolysieren der Mischung der Ingredienzien von (a) mit einer Mischung von Ingredienzien, die Methanol und Wasser umfaßt, wobei das verwendete Wasser in einer Menge vorhanden ist, die gleich 1,15 bis 1,33 Mole des Letzteren pro Mol des ursprünglich benutzten Methyltrichlorsilans beträgt,
wobei in Stufe (a) von 25 bis 75% der Gesamtmenge des Methanols, das in den Stufen (a) und (b) benutzt wird, eingesetzt werden,
(c) Kondensierenlassen des Hydrolyseproduktes von (b) in Gegenwart des Chlorwasserstoffes, der in der Reaktionsmischung gelöst ist und
(d) Isolieren der harzhaltigen Schicht von dem flüssigen Mehrphasensystem, das als Ergebnis der in (c) beschriebenen Kondensation erhalten wird.

8. Zusammensetzung bestehend aus:
(a) einem Organopolysiloxanharz, ausgewählt aus der Gruppe bestehend aus Harzen, die R₃SiO_{0,5}-Einheiten und SiO₂-Einheiten enthalten, wobei das Verhältnis der R₃SiO_{0,5}-Einheiten zu den SiO₂-Einheiten von etwa 0,2 bis etwa 0,9:1 liegt sowie Harzen, die R₃SiO_{0,5}-Einheiten, R₂SiO-Einheiten und SiO₂-Einheiten enthalten, wobei das Verhältnis der R₃SiO_{0,5}-Einheiten zu den SiO₂-Einheiten im Bereich von 0,2 bis etwa 0,9:1 liegt und das Verhältnis der R₂SiO-Einheiten zu den SiO₂-Einheiten bis zu etwa 0,1:1 beträgt, worin jedes R ein unabhängig ausgewählter substituierter oder unsubstituierter Alkylrest, Arylrest, Alkarylrest, Aralkylrest, Cycloalkylrest oder Alkenylrest ist,
(b) einem Alkylalkoxypolysiloxanharz und
(c) einer wirsamen Menge Lösungsmittel,
worin das Verhältnis von (a) zu (b) im Bereich von etwa 1:1 bis etwa 9:1 liegt.

9. Verwendung einer Zusammensetzung, um Mauerwerk wasserabstoßend zu machen, wobei die Zusammensetzung besteht aus:
(a) einem Organopolysiloxanharz, ausgewählt aus der Gruppe bestehend aus Harzen, die R₃SiO_{0,5}-Einheiten und SiO₂-Einheiten enthalten, wobei das Verhältnis der R₃SiO_{0,5}-Einheiten zu den SiO₂-Einheiten im Bereich von etwa 0,2 bis etwa 0,9:1 liegt und Harzen, die R₃SiO_{0,5}-Einheiten, R₂SiO-Einheiten und SiO₂-Einheiten enthalten, wobei das Verhältnis der R₃SiO_{0,5}-Einheiten zu den SiO₂-Einheiten im Bereich von etwa 0,2 bis etwa 0,9:1 liegt und das Verhältnis der R₂SiO-Einheiten zu SiO₂-Einheiten bis zu etwa 0,1:1 beträgt, worin jedes R ein unabhängig ausgewählter substituierter oder unsubstituierter Alkylrest, Arylrest, Alkarylrest, Aralkylrest, Cycloalkylrest oder Alkenylrest ist;
(b) einem Alkylalkoxypolysiloxanharz und
(c) einer wirksamen Menge Lösungsmittel,
worin das Verhältnis von (a) zu (b) im Bereich von etwa 1:1 bis etwa 9:1 liegt.

10. Verwendung nach Anspruch 9, worin das Verhältnis von (a) zu (b) etwa 7:3 beträgt.

11. Verwendung nach Anspruch 9, worin das Lösungsmittel ein organisches Lösungsmittel ist.

12. Verwendung nach Anspruch 11, worin das Lösungsmittel ausgewählt ist aus Toluol und Xylol.

13. Verwendung nach Anspruch 9, worin die Zusammensetzung etwa 1 bis etwa 20 Gew.-% Harzfeststoffe aufweist.

14. Verwendung nach Anspruch 9, worin das Alkylalkoxypolysiloxanharz die empirische Formel hat 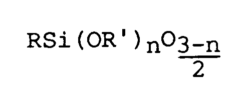 worin n eine Zahl von 1/3 bis 1 ist, R ein einwertiger organischer Rest ist, der keine olefinische Ungesättigtheit aufweist, bei dem die freie Wertigkeit mit einem acyclischen Kohlenstoffatom verbunden ist, an das mindestens ein Wasserstoffatom gebunden ist und bei dem irgendein Atom, das anders ist als Kohlenstoff und Wasserstoff, ein Halogen mit einem Atomgewicht von weniger als 80 ist, das an ein anderes Kohlenstoffatom gebunden ist, als eines, das an das acyclische Kohlenstoffatom gebunden ist und R' ein einwertiger organischer Rest ohne olefinische Ungesättigtheit ist, bei dem die freie Wertigkeit mit einem aliphatischen Kohlenstoffatom verbunden ist, an den mindestens ein Wasserstoffatom gebunden ist und bei dem irgendein anderes Atom als Kohlenstoff und Wasserstoff ein Halogen mit einem Atomgewicht von weniger als 80 ist.

15. Verwendung nach Anspruch 9, worin das Alkylalkoxypolysiloxanharz die Formel hat 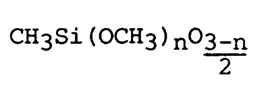 worin n einen Wert von 1/3 bis 0,7 hat und es hergestellt ist durch
(a) Behandeln von Methyltrichlorsilan bei Abwesenheit von Wasser und in Anwesenheit eines in Wasser unlöslichen inerten Lösungsmittels für das Letztere, mit Methanol in einer Menge, die gleich 1 bis weniger als 3 Mole Methanol pro Mol des Methyltrichlorsilans beträgt, wobei die obere Grenze des Methanols ausreicht, nur einen Teil der silikongebundenen Chloratome des Methyltrichlorsilans durch Methoxygruppen zu ersetzen und das Nebenprodukt HCl in der Reaktionsmischung verbleibt,
(b) Hydrolysieren der Mischung der Ingredienzien von (a) mit einer Mischung von Ingredienzien, die Methanol und Wasser umfaßt, wobei das verwendete Wasser in einer Menge vorhanden ist, die gleich 1,15 bis 1,33 Mole des Letzteren pro Mol des ursprünglich benutzten Methyltrichlorsilans beträgt,
wobei in Stufe (a) von 25 bis 75% der Gesamtmenge des Methanols, das in den Stufen (a) und (b) benutzt wird, eingesetzt werden,
(c) Kondensierenlassen des Hydrolyseproduktes von (b) in Gegenwart des Chlorwasserstoffes, der in der Reaktionsmischung gelöst ist und
(d) Isolieren der harzhaltigen Schicht von dem flüssigen Mehrphasensystem, das als Ergebnis der in (c) beschriebenen Kondensation erhalten wird.

16. Verwendung nach Anspruch 14, worin das Verhältnis von (a) zu (b) im Bereich von etwa 50:4,3 bis etwa 50:17,2 liegt.

## Revendications

1. Composition hydrofuge pour maçonnerie, constituée de :
(a) une résine organopolysiloxane choisie dans le groupe formé par les résines contenant des unités R₃SiO_{0,5} et des unités SiO₂, le rapport des unités R₃SiO_{0,5} aux unités SiO₂ allant d'environ 0,2 à environ 0,9:1 et des résines contenant des unités R₃SiO_{0,5}, des unités R₂SiO et des unités SiO₂, le rapport des unités R₃SiO_{0,5} aux unités SiO₂ allant d'environ 0,2 à environ 0,9:1 et le rapport des unités R₂SiO aux unités SiO₂ étant d'environ 0,1:1; où chaque R est, indépendamment des autres, un radical alkyle, un radical aryle, un radical alcaryle, un radical aralkyle, un radical cycloalkyle ou un radical alcényle, substitué ou non substitué;
(b) une résine alkylalcoxypolysiloxane, et
(c) une quantité efficace de solvant,
où le rapport de (a) à (b) est d'environ 1:1 à environ 9:1.

2. Composition selon la revendication 1, où le rapport de (a) à (b) est d'environ 7:3.

3. Composition selon la revendication 1, où le solvant est un solvant organique.

4. Composition selon la revendication 3, où le solvant est choisi parmi le toluène et le xylène.

5. Composition selon la revendication 1, où la composition contient d'environ 1 à environ 20% en poids de résine solide.

6. Composition selon la revendication 1, où la résine alkylalcoxy polysiloxane a comme formule empirique : 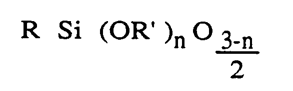 où n est un nombre de 1/3 à 1, R est un radical organique monovalent n'ayant pas d'insaturation oléfinique et dans lequel la valence libre est reliée à un atome de carbone acyclique auquel est attaché au moins un atome d'hydrogène, et dans lequel tout atome autre que carbone et hydrogène est un halogène ayant un poids atomique inférieur à 80 et qui est attaché à un atome de carbone autre que celui relié audit carbone acyclique; et R' est un radical organique monovalent n'ayant pas d'insaturation oléfinique et dans lequel la valence libre est reliée à un atome de carbone aliphatique auquel est attaché au moins un atome d'hydrogène, et dans lequel tout atome autre que carbone et hydrogène est un atome d'halogène ayant un poids atomique inférieur à 80.

7. Composition selon la revendication 1, où la résine alkylalcoxy polysiloxane a pour formule : 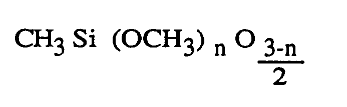 où n a une valeur allant de 1/3 à 0,7 et dont la préparation comporte (a) le traitement du méthyltrichlorosilane, en l'absence d'eau et en présence d'un solvant inerte insoluble dans l'eau, avec le méthanol en une quantité allant de 1 à moins de 3 moles de méthanol par mole de méthyltrichlorosilane, la limite supérieure du méthanol étant suffisante pour ne remplacer qu'une partie des atomes de chlore liés à la silice dans le méthyltrichlorosilane par des groupes méthoxy, le HCl, sous-produit, étant retenu dans le mélange de réaction; (b) l'hydrolyse du mélange des ingrédients (a) avec un mélange d'ingrédients comprenant le méthanol et l'eau dans lequel l'eau utilisée est présente en une quantité allant de 1,15 à 1,33 moles par mole de méthyltrichlorosilane utilisé à l'origine, la quantité de méthanol utilisée dans l'étape (a) étant de 25 à 75% de la quantité totale de méthanol utilisée dans les étapes (a) et (b); (c) la condensation du produit d'hydrolyse de (b) en présence de l'acide chlorhydrique dissous dans le mélange réactionnel; et (d) l'isolation de la couche contenant la résine à partir du système liquide multiphase obtenu comme résultat de la condensation décrite sous (c).

8. Composition constituée de :
(a) une résine organopolysiloxane choisie dans le groupe formé par des résines contenant des unités R₃SiO_{0,5} et des unités SiO₂, le rapport des unités R₃SiO_{0,5} aux unités SiO₂ allant d'environ 0,2 à environ 0,9:1, et des résines contenant des unités R₃SiO_{0,5}, des unités R₂SiO et des unités SiO₂, le rapport des unités R₃SiO_{0,5} aux unités SiO₂ allant d'environ 0,2 à environ 0,9:1 et le rapport des unités R₂SiO aux unités SiO₂ pouvant aller jusqu'à 0,1:1; où chaque R est, indépendamment des autres, un radical alkyle, un radical aryle, un radical alcaryle, un radical aralkyle, un radical cycloalkyle ou un radical alcényle, substitué ou non substitué;
(b) une résine alkylalcoxypolysiloxane, et
(c) une quantité efficace de solvant,
où le rapport de (a) à (b) est d'environ 1:1 à environ 9:1.

9. Utilisation d'une composition pour hydrofuger une maçonnerie, cette composition étant constituée de :
(a) une résine organopolysiloxane choisie dans le groupe formé par des résines contenant des unités R₃SiO_{0,5} et des unités SiO₂, le rapport des unités R₃SiO_{0,5} aux unités SiO₂ allant d'environ 0,2 à environ 0,9:1, et des résines contenant des unités R₃SiO_{0,5}, des unités R₂SiO et des unités SiO₂, le rapport des unités R₃SiO_{0,5} aux unités SiO₂ allant d'environ 0,2 à environ 0,9:1 et le rapport des unités R₂SiO aux unités SiO₂ pouvant aller jusqu'à 0,1:1; où chaque R est, indépendamment des autres, un radical alkyle, un radical aryle, un radical alcaryle, un radical aralkyle, un radical cycloalkyle ou un radical alcényle, substitué ou non substitué;
(b) une résine alkylalcoxypolysiloxane, et
(c) une quantité efficace de solvant,
où le rapport de (a) à (b) est d'environ 1:1 à environ 9:1.

10. Utilisation selon la revendication 9, où le rapport de (a) à (b) est d'environ 7:3.

11. Utilisation selon la revendication 9, où le solvant est un solvant organique.

12. Utilisation selon la revendication 11, où le solvant est choisi parmi le toluène et le xylène.

13. Utilisation selon la revendication 9, où la composition comporte environ 1 à environ 20% en poids de résine solide.

14. Utilisation selon la revendication 9, où la résine alkylalcoxy polysiloxane a comme formule empirique : 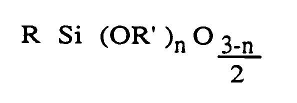 où n est un nombre de 1/3 à 1, R est un radical organique monovalent n'ayant pas d'insaturation oléfinique, dans lequel la valence libre est reliée à un atome de carbone acyclique auquel est attaché au moins un atome d'hydrogène, et dans lequel tout atome autre que carbone et hydrogène est un halogène ayant un poids atomique inférieur à 80 et qui est attaché à un atome de carbone autre que celui relié audit carbone acyclique; et R' est un radical organique monovalent n'ayant pas d'insaturation oléfinique et dans lequel la valence libre est reliée à un atome de carbone aliphatique auquel est attaché au moins un atome d'hydrogène, dans lequel tout atome autre que carbone et hydrogène est un atome d'halogène ayant un poids atomique inférieur à 80.

15. Utilisation selon la revendication 9, où la résine alkylalcoxy polysiloxane a pour formule : 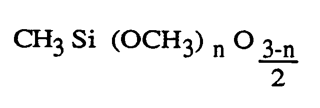 où n a une valeur allant de 1/3 à 0,7 et dont la préparation comporte (a) le traitement du méthyltrichlorosilane, en l'absence d'eau et en présence d'un solvant inerte insoluble dans l'eau, avec le méthanol, en une quantité allant de 1 à moins de 3 moles de méthanol par mole de méthyltrichlorosilane, la limite supérieure du méthanol étant suffisante pour ne remplacer qu'une partie des atomes de chlore liés à la silice dans le méthyltrichlorosilane par des groupes méthoxy, le HCl, sous-produit, étant retenu dans le mélange de réaction; (b) l'hydrolyse du mélange des ingrédients de (a) avec un mélange d'ingrédients comprenant le méthanol et l'eau dans lequel l'eau utilisée est présente en une quantité allant de 1,15 à 1,33 moles de cette dernière par mode de méthyltrichlorosilane utilisé à l'origine, la quantité de méthanol utilisée dans l'étape (a) étant de 25 à 75% de la quantité totale de méthanol utilisée dans les étapes (a) et (b); (c) la condensation du produit d'hydrolyse de (b) en présence de l'acide chlorhydrique dissous dans le mélange réactionnel; et (d) l'isolation de la couche contenant la résine à partir du système liquide multiphase obtenu comme résultat de la condensation décrite sous (c).

16. Utilisation selon la revendication 14, où le rapport de (a) à (b) est d'environ 50:4,3 à environ 50:17,2.
